# EUROPEAN PATENT APPLICATION

(11) **EP 1 505 415 A1**
(43) Date of publication of application: **09.02.2005**
(21) Application number: 03292004.3
(22) Date of filing: 08.08.2003
(51) Int. Cl.: G02B 6/12

(54) **Photonic crystal waveguide**

(71) Applicant: ALCATEL, 75008 Paris (FR)
(72) Inventor: Bastian, Georg, Dr., 76139 Karlsruhe (DE)
(74) Representative: Rausch, Gabriele, Dr.

(57) **Abstract**

An optical device for guiding light having a photonic crystal structure with a waveguide, wherein the waveguide path is realized in form of an edge of the photonic crystal. The edge has in particular a structure, which is formed in correspondence to a desired waveguide path.

## Description

### Field of the invention:

The invention relates to an optical device for guiding light, and its applications. In particular, the optical device has a photonic crystal structure with a waveguide. The optical device is suitable for use in optical telecommunication systems which operates for example in a range from about 600 nm to 1800 nm.

In general, a photonic crystal is a material or a structure having a periodic variation in the electric constant. The periodic variations and the photonic crystal may be one, two or three dimensional. Similar to semiconductors, photonic crystals have allowed bands of wavelengths, i.e. wavelengths which are allowed to passage the crystal, and band gaps which define the wavelengths which are excluded from a passage through the crystal. Light having a wavelength in bands above and below the band gap may propagate through the crystal. The band gaps are determined by the period of the variation in dielectric constant. By introducing defects into the periodic variation of the photonic crystal dielectric constant, so-called defect modes are generated, corresponding to particular light wavelength which can propagate in the portion of the crystal containing the defect. Therefore, a line defect or a plain defect in a three-dimensional photonic crystal can act as a waveguide, allowing a guided mode to exist in the band gap.

EP 0 964 305 Al discloses a method for making a photonic crystal having a waveguide. At least two distinct interference patterns are used to write a photonic crystal lattice in a photoresist layer. A thin layer of a material which is opaque to a photoresist exposure wavelength, having the shape of a desired waveguide is created on a substrate. The material of the substrate is chosen to be transparent to the photoresist exposure wavelength. A thick photoresist layer is applied over the substrate and the opaque material in the shape of the waveguide. Than, light is directed through the substrate on the backside of the photoresist layer, thereby generates a periodic pattern, for example cylinder pegs or holes in the photoresist layer, except the area which is covered by the opaque material. After development of the thick photoresist layer the photonic crystal structure having a waveguide cavity is produced.

WO 01/42831 discloses a photonic crystal fiber having a core with a first refractive index and a cladding region made from bulk material. The bulk material has a second refractive index that is higher than the first refractive index therein. It contains an arrangement of elongate longitudinal holes being of a hole material of a third refractive index that is lower than the first refractive index. The diameter of the holes are about 0,7 *µ*m and the pitch is about 3,5 *µ*m. The fiber comprises a central part, i.e. the core, which is a "defect": it has no hole in the center.

Furthermore, WO 01/42829 discloses an improved photonic crystal fiber. The cladding region of that fiber has an effective refractive index which varies across the fibers cross-section. This is achieved by variation of the arrangement of the holes in the bulk material. Thus, the shape of the holes, there sizes and the material which surrounds them or which they contain can vary across the cross section of the fiber, thereby creating the effective refractive index variations which introduce new functionality into the fiber cladding.

A single mode guide needs a structure sizes comparable to the wavelength within the material and the confinement of light is achieved by contrast of the refractive index between the guiding core layer and the covering cladding layers. As mentioned above, within photonic crystal so-called defect waveguides can be fabricated. They consist of local modifications of the periodic variation in dielectric constant which permits a transmission of light along these defects. The fabrication of defect waveguides needs small structure sizes. Conventional waveguides have to be defined by lithography and etching techniques. A waveguide of the state of the art laterally consists of two confining sides, which are close to each other for guiding the light.

### Summary of the invention:

It is therefore an object of the present invention to provide an optical device, which is simple to fabricate.

The object is achieved by an optical device according to claim 1.

According to the present invention, an optical device for guiding light having a photonic crystal structure comprises a waveguide, which is realized in form of an edge of the photonic crystal. In a real crystal the periodicity ends at its surface, such that surface states appears energetically within the bandgap, so-called TAMM-states. The surface and the surface states respectively of the crystal are designed such, that a defect waveguide at the edge of the photonic crystal is formed, which is suitable for guiding light. The light is confined laterally by the permitted surface states, the refractive index of the current media and the band gap of the photonic crystal.

A conventional waveguide needs laterally to confining sides for guiding the light. A properly designed surface or interface defect state, however, only needs one confining side. Thus, the fabrication of the defect waveguide in a photonic crystal can be realized easily at a single surface, which lateral patterning is much simpler. Conventional waveguides in photonic crystals are based on a local line of defects, which can be realized e.g. by extensive electron-beam lithography. The optical device according to the invention enables a cheap fabrication method because of the realization as an edge state waveguide, i.e. the formation of a periodic structure within a restricted well-defined region.

Further advantages and developments of the invention are apparent from the description and the accompanying drawings.

It is to be understand that the aforementioned features and the features explained below can be used not only in the respective combination described but also in other combinations or alone without departing from the scope of the present invention.

### Brief description of the drawings:

Preferred embodiments of the present invention will now be described with reference to the accompanying drawings in which
- Fig. 1: shows schematically a photonic crystal with a waveguide of the state of the art,
- Fig. 2: shows a photonic crystal having a waveguide according to the invention, and
- Fig. 3: shows a photonic crystal-edge-state-ring-resonator as an embodiment of the present invention.

### Detailed description of the invention:

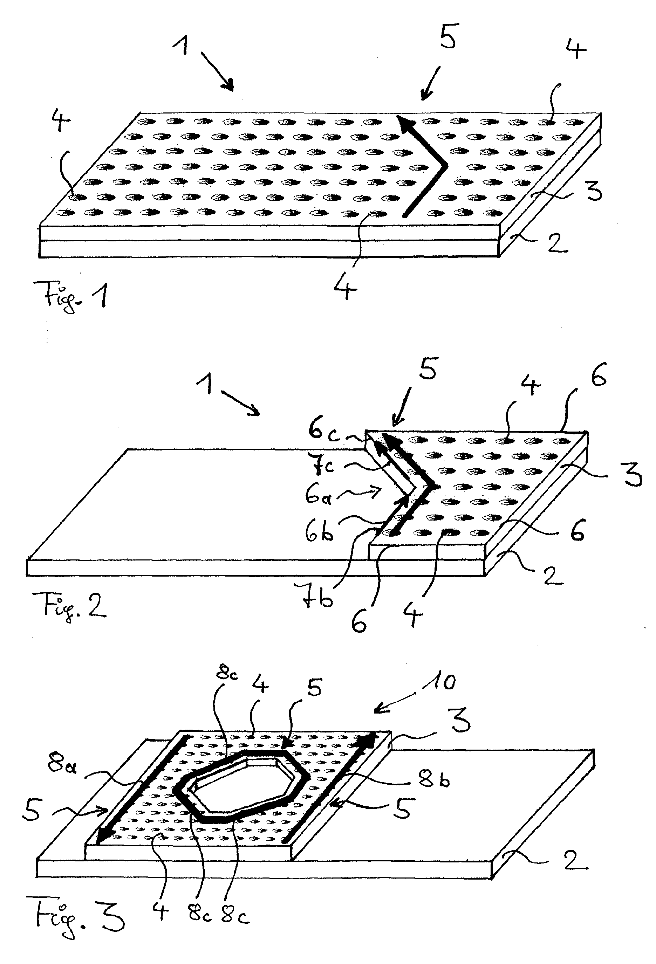

Fig. 1 shows a photonic crystal having a waveguide of the state of the art. The photonic crystal 1 consists of an substrate layer 2 carrying an photonic crystal layer 3. The layer 3 has a periodic structure, for example holes 4 arranged periodically in the layer 3. Several sub-*µ*m lithography methods are known for generating such periodical structures, for example electron-beam, nano-imprint, holographic structuring, dry etching (ICP, RIE) or photo chemical anisotopice set etching, nano-printing, or material replacement. The photonic crystal 1 further comprises a waveguide 5 for the transmission of light. The waveguide 5 is a defect guide, consist of missing holes, which are usually fabricated with a electronic-beam lithography.

Fig. 2 shows a photonic crystal 1 having a waveguide according to the invention. The photonic crystal 1 comprises a substrate 2 carrying the photonic crystal layer 3 including a periodical structure, e.g. holes 4. However the photonic crystal latice feature may be arranged in the other number of patterns. The photonic crystal 1 comprises a plurality of edges 6, wherein at least one edge 6a is provided as a waveguide 5 of the photonic crystal 1. Only the periodic structure has sub-*µ*m-sides which can for example holographically be fabricated. The transmission of light is effected along the surface states of the edge 6a of the photonic crystal.

The edge or edge structure 6a is for example formed from a plurality of (partial) sub-edges 6b, 6c, each having an basically straight extension 7b, 7c, which is directed in parallel to the correspondent bondage of the crystal. A change in the extension direction from a sub-edge 7b, to a subsequent sub-edge 7c is preferably directed away from the crystal.

Fig. 3 shows a further development of the optical device according to the invention, which is an photonic crystal-edge-state-ring-resonator. The PC-edge-state ring-resonator 10, comprises a first edge 8a and a second edge 8b as input-/output-ports and a ring-resonator consists of a plurality of edges 8c, arranged in a circle. The input-/output-port 8a-8b are arranged in opposite to each other, wherein the ring-resonator is located between the edges 8a, 8b.

Conventional ring resonators are limited by the minimum curvature of the rings to avoid loss. Photonic crystal ring resonators require structures made by electron-beam lithography, whereas the structure in fig. 3 has none of the above mentioned restrictions.

## Claims

1. Optical device for guiding light having a photonic crystal structure with a waveguide, **characterized in that**, the waveguide path is realized in form of an edge of the photonic crystal.

2. Optical device according to claim 1, **characterized in that**, the edge has a structure formed in correspondence to a desired waveguide path.

3. Optical device according to claim 2, **characterized in that** the edge structure is formed from a plurality of sub-edges, each having an basically straight extension, which is directed in parallel to the correspondent bondage of the crystal, wherein a change in the extension direction from a sub-edge to a subsequent sub-edge is directed away from the crystal.

4. Optical device according to claim 3, **characterized in that**, that the optical device is an edge-ring-resonator, having a first edge and a second edge as an input / output waveguide, which are arranged in opposite to each other, and having a ring path formed from a plurality of sub-edges, arranged in the circle and placed between said first and second edge.

5. Optical device according to one of the claims 1 to 4, **characterized in that**, reduced dimensions of the modefield diameter within the waveguide defined by the edge and the photonic band gap enables enhanced non-linear optical effects.
